# DEMANDE DE BREVET EUROPEEN

(11) **EP 1 291 245 A1**
(43) Date de publication de la demande: **12.03.2003**
(21) Numéro de dépôt: 02292156.3
(22) Date de dépôt: 02.09.2002
(51) Int. Cl.: B60R 5/04

(54) **Revêtement pour véhicule automobile**

(30) Priorité: 06.09.2001 FR 0111515
(71) Demandeur: Renault s.a.s., 92100 Boulogne Billancourt (FR)
(72) Inventeur: Durand, Patrick, 75020 Paris (FR); Velay, Michel, 78640 St-Germain de La Grange (FR)

(57) **Abrégé**

Revêtement (1) pour véhicule automobile, ledit revêtement (1) comportant une face (3) en contact avec un support (2) et une face (4) apte à recevoir un objet (5), caractérisé en ce qu'il forme une empreinte de retenue de l'objet (5) lorsque ledit objet (5) est posé sur le revêtement (1), et en ce qu'il retrouve sa forme initiale lorsque ledit objet (5) est retiré.

## Description

L'invention concerne un revêtement pour véhicule automobile et plus particulièrement un revêtement à mémoire de forme permettant de limiter le déplacement d'objets posés dans le coffre ou bien sur la tablette arrière quand le véhicule est en circulation.

Les objets transportés dans un véhicule sont habituellement posés dans le coffre ou sur la tablette recouverts d'un tapis. Lorsque le véhicule est en circulation, les bagages et les colis ont tendance à se déplacer dans le coffre lors des accélérations et des décélérations ainsi que dans les virages. Le bruit des objets transportés se déplaçant à l'intérieur du coffre est alors désagréable pour les passagers du véhicule. De plus, lesdits objets peuvent être détériorés en se cognant entre eux ou contre les parois du coffre. De même, les petits objets entreposés sur la tablette arrière ont tendance à glisser dans les virages. Il est donc nécessaire de limiter le déplacement des objets transportés dans le coffre ou sur la tablette arrière.

On connaît un système d'immobilisation d'objets dans le coffre d'un véhicule automobile par une ou plusieurs sangles décrit dans la publication EP-A-0949119. L'une des extrémités de la sangle est reliée à un enrouleur fixé sur une paroi du coffre. L'autre extrémité de la sangle comporte un pêne de verrouillage destiné à coopérer avec des moyens de verrouillage fixés à différents endroits des parois du coffre. Ce type de dispositif est plutôt utilisé dans le cas de véhicules utilitaires. Cependant, la présence de moyens de verrouillage et d'enrouleurs sur les parois du coffre peut être inesthétique dans le coffre d'un véhicule particulier. De plus, les moyens de verrouillage ne sont pas toujours idéalement placés en fonction du type et de la taille de l'objet transporté. Ce dispositif est surtout adapté pour un objet encombrant mais n'est pas du tout pratique dans le cas où l'on a plusieurs objets de petite taille à ranger dans le coffre, la sangle ne pouvant les maintenir tous à la fois. De plus, il est nécessaire de trouver des zones d'intégration de l'enrouleur et du moyen de verrouillage. Ce type de solution a donc un coût élevé.

On connaît par ailleurs un autre moyen d'immobilisation d'objets dans le coffre d'un véhicule automobile décrit dans la publication UK-A-2196907. Ce dispositif consiste en un filet dont les coins sont munis d'attaches destinées à coopérer avec des axes de fixation situés dans le coffre. Soit ce filet est entièrement élastique, soit un cordon élastique est passé dans le pourtour dudit filet. Le filet est placé par dessus les objets transportés et permet de retenir de petits et de grands objets. Il est cependant peu pratique car l'utilisateur doit se baisser et fixer les attaches du filet au fond du coffre, ce qui est difficile une fois ledit coffre rempli. Ce dispositif nécessite de plus la mise en place de fixations supplémentaires à l'intérieur du coffre, ce qui est onéreux. Le filet est également inesthétique.

On connaît également un autre système d'immobilisation de bagages décrit dans la publication US-A-4387840. Ce dispositif consiste à disposer les valises sur deux rails horizontaux verrouillables. Les valises doivent aussi être munies de rainures destinées à coopérer avec les rails. D'une part ce système permet d'immobiliser uniquement des objets de type valises et non pas des objets quelconques tels que des sacs ou des colis par exemple. De plus, seuls des bagages préalablement conçus pour ce type de dispositif peuvent être utilisés. Il est également impossible pour l'utilisateur de disposer les bagages comme il le veut à l'intérieur du coffre.

Afin de pallier ces inconvénients, l'invention a pour objet un revêtement à mémoire de forme permettant d'immobiliser des objets sur des surfaces horizontales tel qu'à l'intérieur d'un coffre ou sur une tablette arrière.

L'invention a également pour objet, un revêtement dont la mise en oeuvre est aisée.

Selon une caractéristique de l'invention, le revêtement forme une empreinte de retenue de l'objet lorsque ledit objet est posé sur le revêtement, et retrouve sa forme initiale lorsque ledit objet est retiré.

Selon une autre caractéristique de l'invention, que le matériau est constitué d'un polymère expansé à mémoire de forme.

Selon une autre caractéristique de l'invention, le matériau est constitué d'un gel.

Selon une autre caractéristique de l'invention, le matériau comporte des coussins d'air communiquant entre eux.

Selon une autre caractéristique de l'invention, la pression d'air des coussins est ajustable.

Selon une autre caractéristique de l'invention, la face du revêtement comporte un habillage extensible.

Selon une autre caractéristique de l'invention, le revêtement comporte des zones de portances différentes.

Selon une autre caractéristique de l'invention, le revêtement est amovible.

Selon une autre caractéristique de l'invention, le revêtement est un tapis de coffre.

Selon une autre caractéristique de l'invention, le revêtement est un habillage de tablette arrière.

Selon une autre caractéristique de l'invention, le revêtement est un habillage d'au moins une partie de planche de bord.

D'autres caractéristiques et avantages de l'invention apparaîtront à la lecture de la description d'exemples de réalisation d'un revêtement pour véhicule automobile au dessin annexé dans lequel :
- La figure 1 représente un schéma général du revêtement en position de repos.
- La figure 2 représente un schéma du revêtement selon un premier mode de réalisation de l'invention dans une position de repos.
- La figure 3 représente un schéma du revêtement selon un premier mode de réalisation de l'invention dans une position de travail.
- La figure 4 représente un schéma du revêtement selon un deuxième mode de réalisation de l'invention dans une position de repos.
- La figure 5 représente un schéma du revêtement selon un deuxième mode de réalisation de l'invention dans une position de travail.

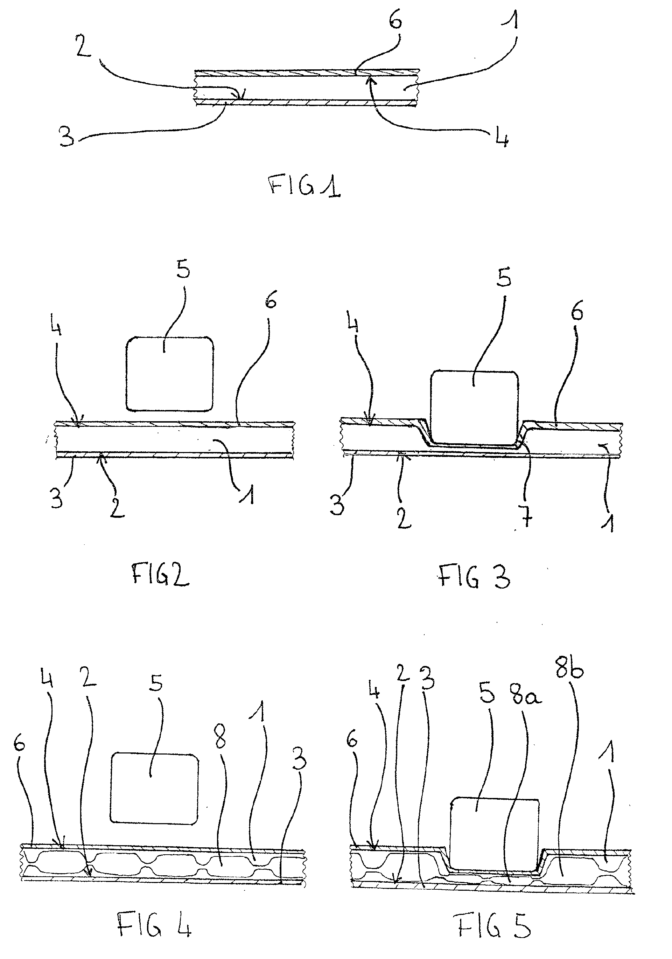

Tel que représenté sur la figure 1, un revêtement 1 en matériau compressible à mémoire de forme comporte une face 2 qui est en contact avec un support 3 pouvant être la tôle de plancher du coffre d'un véhicule ou bien une tablette arrière par exemple, et une face 4 destinée à recevoir un objet 5. Le revêtement 1 est recouvert d'un habillage 6 tel que de la moquette, par exemple. L'habillage 6 doit être extensible de façon à permettre la déformation du revêtement 1.

Tel que représenté sur la figure 2, le revêtement 1 selon un premier mode de réalisation peut être un polymère expansé possédant une forme au repos préalablement définie.

Tel que représenté sur la figure 3, le revêtement 1 se déforme sous le poids de l'objet 5 posé à sa surface. Ce matériau épouse parfaitement la forme de l'objet 5 et en conserve l'empreinte 7 tant qu'il est posé sur sa surface. Lorsque l'objet 5 est retiré, le matériau garde quelques instants la forme dudit objet 5 puis reprend sa forme initiale.

Il existe des matériaux à mémoire de forme possédant des portances différentes en fonction de l'objet qui doit être transporté. Une portance souple peut être indiquée pour un objet léger car il va alors s'enfoncer suffisamment dans le revêtement 1 pour être bien calé. Inversement, une portance plus ferme est préférable pour un objet lourd.

Avantageusement, le revêtement 1 peut comporter des zones dont la portance est différente afin que l'on puisse ranger des objets de poids différents.

Avantageusement, le véhicule peut comporter un jeu de tapis de coffre amovibles dont le revêtement 1 est différent en fonction des objets qui doivent être transportés. Une portance plus ferme peut être nécessaire pour transporter des bagages par exemple. Au contraire, un tapis dont la portance est souple permet de transporter des objets légers tels que des sacs ou des colis par exemple. Il suffit donc d'adapter le tapis en fonction de l'usage que l'on veut en faire.

Avantageusement, ce type de revêtement peut également être appliqué sur une planche de bord afin d'empêcher de petits objets tels que des lunettes ou de la monnaie, par exemple, de glisser.

Lorsque l'utilisateur veut ranger un objet dans le coffre ou sur la tablette arrière du véhicule, il pose ledit objet dans une position quelconque sur le revêtement 1. L'objet s'enfonce partiellement dans ledit revêtement. Pendant le voyage, l'objet est calé par le revêtement 1 car il est retenu latéralement et reste en place lors des accélérations et décélérations ainsi que dans les virages. Quand ensuite l'utilisateur retire l'objet, le revêtement retrouve sa forme initiale au bout de quelques instants, ce qui permet ainsi de retrouver un revêtement uniforme.

Tel que représenté sur la figure 4, le revêtement 1 selon un deuxième mode de réalisation est formé de coussins d'air 8 pouvant communiquer entre eux. La pression de l'air contenu dans les coussins 8 est à l'équilibre lorsqu'aucun objet n'est posé sur la surface du revêtement 1, c'est-à-dire en position de repos.

Tel que représenté sur la figure 5, lorsque l'objet 5 est posé sur le revêtement 1, les coussins d'air 8a situés sous la surface dudit objet 5 se vident et s'écrasent. L'air contenu dans les coussins 8a migre vers les coussins périphériques 8b se situant autour de l'objet 5. Lesdits coussins périphériques 8b sont alors surgonflés. Lorsque l'objet 5 est retiré de la surface du revêtement, les coussins 8a sont libérés du poids dudit objet 5. L'air contenu dans les coussins périphériques 8b migre vers les coussins 8a jusqu'à équilibre des pressions. Le revêtement 1 retrouve sa forme initiale.

Avantageusement, la pression des coussins 8 peut être différente d'un revêtement à l'autre en fonction de l'usage prévu. Un revêtement dont les coussins d'air sont peu gonflés est plus adapté à des objets légers. Inversement, un revêtement dont les coussins d'air sont très gonflés est préconisé pour des objets lourds.

Avantageusement, le véhicule peut comporter des tapis de coffre amovibles à coussins d'air de façon à pouvoir ajuster la souplesse du tapis en fonction des objets que l'on veut transporter.

La pression des coussins d'air 8 du revêtement 1 peut être ajustée par l'utilisateur de façon à adapter le revêtement 1 à l'usage prévu. Le revêtement 1 peut également prévoir des zones où les coussins d'air 8 ne communiquent pas entre eux de façon avoir des zones de pressions différentes sur un seul tapis de coffre, par exemple.

Lorsque l'utilisateur pose un objet sur le revêtement 1, ledit objet s'enfonce dans ledit revêtement 1 jusqu'à équilibre de l'air contenu dans les coussins 8. L'objet est alors calé lorsque le véhicule est en circulation et ne peut donc plus glisser. Lorsque l'utilisateur soulève et retire l'objet, les coussins d'air 8 reprennent leur état d'équilibre et le revêtement 1 retrouve sa forme initiale.

On peut également utiliser dans le revêtement 1 un autre fluide tel qu'un gel, par exemple, à la place de l'air.

## Revendications

1. Revêtement (1) pour véhicule automobile, ledit revêtement (1) comportant une face (3) en contact avec un support (2) et une face (4) apte à recevoir un objet (5), **caractérisé en ce qu'**il forme une empreinte de retenue de l'objet (5) lorsque ledit objet (5) est posé sur le revêtement (1), et **en ce qu'**il retrouve sa forme initiale lorsque ledit objet (5) est retiré.

2. Revêtement (1) selon la revendication 1, **caractérisé en ce que** le matériau est constitué d'un polymère expansé à mémoire de forme.

3. Revêtement (1) selon la revendication 1, **caractérisé en ce que** le matériau est constitué d'un gel.

4. Revêtement (1) selon la revendication 1, **caractérisé en ce que** le matériau comporte des coussins d'air (8) communiquant entre eux.

5. Revêtement (1) selon la revendication 4, **caractérisé en ce que** la pression d'air des coussins (8) est ajustable.

6. Revêtement (1) selon l'une quelconque des revendications précédentes, **caractérisé en ce que** la face (4) du revêtement (1) comporte un habillage extensible (6).

7. Revêtement (1) selon l'une quelconque des revendications précédentes, **caractérisé en ce que** ledit revêtement (1) comporte des zones de portances différentes.

8. Revêtement (1) selon l'une quelconque des revendications précédentes, **caractérisé en ce que** ledit revêtement (1) est amovible.

9. Revêtement (1) selon l'une quelconque des revendications précédentes, **caractérisé en ce que** ledit revêtement (1) est un tapis de coffre.

10. Revêtement (1) selon l'une quelconque des revendications précédentes, **caractérisé en ce que** ledit revêtement (1) est un habillage de tablette arrière.

11. Revêtement (1) selon l'une quelconque des revendications précédentes, **caractérisé en ce que** ledit revêtement (1) est un habillage d'au moins une partie de planche de bord.
